# EUROPÄISCHE PATENTSCHRIFT

(11) **EP 2 818 297 B1**
(45) Veröffentlichungstag und Bekanntmachung des Hinweises auf die Patenterteilung: **10.08.2016**
(21) Anmeldenummer: 13173559.9
(22) Anmeldetag: 25.06.2013
(51) Int. Cl.: B29C 45/14

(54) **Spritzgießverfahren**
Injection molding method
Procédé de moulage par injection

(43) Veröffentlichungstag der Anmeldung: 31.12.2014
(73) Patentinhaber: LANXESS Deutschland GmbH, 50569 Köln (DE)
(72) Erfinder: Witt, Michael, 95488 Eckersdorf (DE); Früh, Thomas, 42195 Wuppertal (DE)

(56) Entgegenhaltungen:
- WO-A1-2011/014751
- Hansjürgen Saechtling: "Manuale delle Materie Plastiche", 1. Dezember 2009 (2009-12-01), Tecniche nuove, Borgomanero (NO), XP002720088, ISBN: 978-88-481-2306-8 Seiten 500-507, * das ganze Dokument *
- Baur-Brinkmann-Osswald-Schmachtenberg: "Sachtling Kunststoff Taschenbuch", 31. Dezember 2007 (2007-12-31), Hanser, XP002720089, ISBN: 978-3-446-40352-9 Seiten 754-755, * das ganze Dokument *
- Roc Tool: "Technologies", webarchive , 12. April 2009 (2009-04-12), XP002720090, Gefunden im Internet: URL:http://web.archive.org/web/20090412091 953/http://www.roctool.com/technologies.ht ml [gefunden am 2014-02-11]
- "Recordverdächtig dunn", KUNSTSTOFFE, Bd. 12/2004, 31. Dezember 2004 (2004-12-31), Seiten 126-134, XP002720091, München
- Hansjürgen Saechtling: "Manuale delle Materie Plastiche", 31. Dezember 2009 (2009-12-31), Tecniche nuove, Borgomanero (NO), XP002720092, ISBN: 978-88-481-2306-8 Seiten 661-678, * das ganze Dokument *
- Hansjürgen Saechtling: "Manuale delle Materie Plastiche", 31. Dezember 2009 (2009-12-31), Tecniche nuove, Borgomanero (NO), XP002720160, ISBN: 978-88-481-2306-8 Seiten 496-498, * das ganze Dokument *

## Beschreibung

Die vorliegende Erfindung betrifft ein Spritzgießverfahren unter Einsatz von Polyamid-basierten Formmassen in Kombination mit speziellen Polyamid-basierten Verstärkungsstrukturen zur Herstellung sortenreiner, kälteschlagzäher Erzeugnisse, sogenannter Faserverbundwerkstoffe.

Beim Spritzgießen, das auch als Spritzguss oder Spritzgussverfahren bezeichnet wird, handelt es sich um ein Formgebungsverfahren, das in der Kunststoffverarbeitung sehr häufig verwendet wird. Mittels Spritzguss lassen sich wirtschaftlich direkt verwendbare Formteile in großer Stückzahl herstellen. Das Verfahren funktioniert vereinfacht wie folgt:
In einer Spritzgießmaschine, die aus einem beheizbaren Zylinder, in dem sich eine Schneckenwelle dreht, besteht, wird der jeweilige thermoplastische Werkstoff, die Formmasse, geschmolzen und in eine Form aus Metall, das Werkzeug, eingespritzt. Der Hohlraum des Werkszeugs, die sogenannte Kavität, bestimmt die Form und die Oberflächenstruktur des fertig gegossenen Teils. Es sind heute Spritzgussteile/ Spritzformlinge von deutlich unter einem Gramm bis in den zweistelligen Kilogramm-Bereich herstellbar.

Durch Spritzgießen lassen sich Gebrauchsgegenstände mit hoher Genauigkeit wirtschaftlich in kurzer Zeit produzieren. Die Beschaffenheit der Oberfläche des jeweiligen Spritzformlings kann dabei von den Konstrukteuren nahezu frei gewählt werden. Von glatten Oberflächen für optische Anwendungen, über Narbungen für berührungsfreundliche Bereiche, bis hin zu Mustern oder Gravuren lassen sich eine Vielfalt von Oberflächenstrukturen darstellen.

Die heute im Spritzgießprozess übliche Schneckenkolbenspritzgießmaschine zieht meist Kunststoffe in Form eines Granulats aus einem Trichter in die Schneckengänge ein. Die entstehende Friktionswärme sorgt in Verbindung mit der vom beheizten Zylinder zugeführten Wärme für das Aufschmelzen der Polymer Granulate.

In der sogenannten Einspritzphase wird die Schnecke rückseitig hydraulisch oder durch mechanische Kraft nach vorne geschoben. Dadurch wird die Schmelze bei hohem Druck, bevorzugt zwischen 100 und 2000 bar, in den formgebenden Hohlraum des temperierten Spritzgießwerkzeugs gedrückt. Meist wird noch ein Nachdruck so lange vorgehalten, bis der Spritzformling vollständig erstarrt ist. Dadurch wird die beim Abkühlen entstehende Volumenschwindung weitgehend ausgeglichen. Durch diese Maßnahme werden bessere Maßhaltigkeit und Oberflächenqualität erreicht.

Danach wird das Werkzeug geöffnet und der Spritzformling als fertiges Formteil bzw. Spritzgussteil ausgeworfen.

Spritzgussteile können bevorzugt mit Massen zwischen einigen Milligramm und ca. 50 kg hergestellt werden. Die verarbeiteten thermoplastischen Kunststoffe können durch Additive und Füllstoffe für die Spritzgießverarbeitung und für die spätere Verwendung modifiziert werden. Darunter sind bevorzugt auch anorganische Füllstoffe, insbesondere Glaskugeln oder Glasfasern zu verstehen.

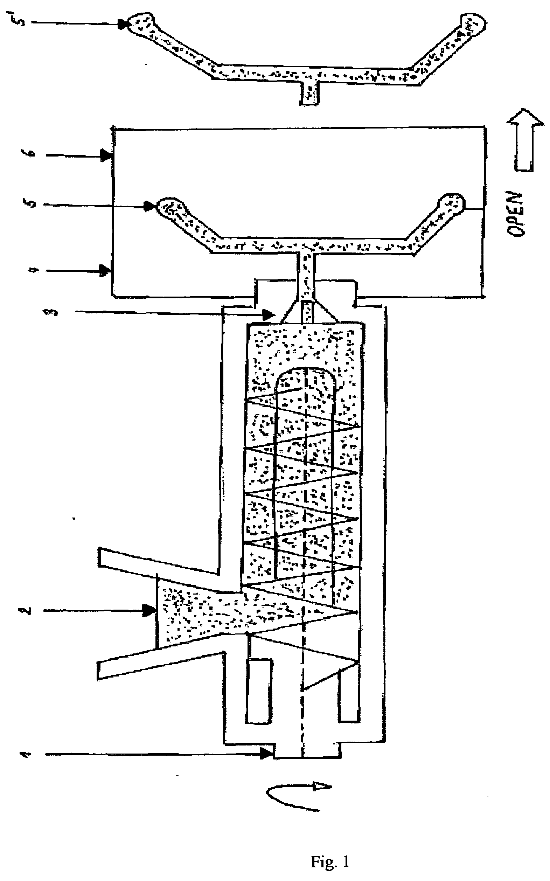

Eine erfindungsgemäß einzusetzende Spritzgießmaschine ist in Fig. 1 dargestellt. In Fig. 1 bedeuten:
1 = Schnecke
2 = Einfülltrichter
3 = Düse
4 = Werkzeug Einspritzseite
5 = Formkern oder Kavität bzw. 5' = Spritzgießteile
6 = Werkzeug

Erfindungsgemäß werden Formmassen auf Basis von Polyamid (PA) eingesetzt.

Polyamid ist ein Kunststoff, der durch Polykondensation nach unterschiedlichen Methoden entsteht; auch eine ringöffnende Polymerisation wird zur Herstellung von Polyamiden kommerziell eingesetzt. Die meisten Typen sind teilkristallin und deswegen opak. Obwohl bereits 1930 entdeckt, kam das PA erst nach 1950 zu seiner vollen Bedeutung und beherrscht seit Einführung der Schnecken-Spritzgießtechnik den Bereich technischer Spritzgussteile für konstruktiv anspruchsvolle Lösungen. 50 % der verarbeiteten Technischen Kunststoffe sind Polyamide. Unter den PA-Typen stellen PA 6 und PA 6,6 mit ca. 90 % die größte Gruppe dar (zusammen weltweit ca. 2 Mio. t/a).

Zu dem überragenden Erfolg als Konstruktionswerkstoff verhalfen dem PA anwendungsbezogene Eigenschaften wie seine hohe Schlagzähigkeit, hoher Verschleißwiderstand und hohe Temperaturbeständigkeit. Betrachtet man die verarbeitungsspezifischen Eigenschaften von PA, dann ist sein sehr gutes Fließverhalten hervorzuheben. Man unterscheidet folgende im Rahmen der vorliegenden Erfindung bevorzugt einzusetzenden Polyamide:
PA 6, PA 6,6, PA 6,9, PA 6,10, PA 6,12, PA 4,6, PA 11, PA 12, PA 11

Alle zuvor aufgeführten Typen sind teilkristallin; der kristalline Anteil liegt üblicherweise unter 50 %, meist unter 35 %.

Da Polyamide zu einem relativ günstigen Preis angeboten werden, werden sie heute mannigfaltig eingesetzt: Im Maschinenbau bei Getriebeteilen, als Lager, Rollen, Dichtungselementen, Schieber, im Automobil als Ansaugkrümmer und Verkleidungen im Motorraum, als Lüfterräder, Ölwannen, Pedale, Airbaggehäuse, Lagerkäfige, Radzierblenden, Schiebedachrahmen, Autoelektrik, im Möbelsektor als Gleitrollen und als Gehäuse für Werkzeugmaschinen im Bau- oder Heimwerkerbereich.

Die hohe Schlagfestigkeit, Abriebfestigkeit und die Anpassbarkeit durch eine große Palette von Zusatz- und Füllstoffen ermöglichen eine nahezu universelle Verwendbarkeit.

Das Spritzgießen von PA wird im Kunststoff-Handbuch 3/4, 1998, Carl Hanser Verlag (ISBN 3-446-16486-3) Polyamide, Seiten 315 - 374 ausführlich beschrieben.

Die hohe Kristallinität ist eine der Ursachen für das gehobene Eigenschaftsniveau dieser Thermoplaste. Beim Spritzgießen kann auf die Kristallinität des Bauteils, insbesondere in den Randzonen, Einfluss genommen werden. Hohe Werkzeugtemperaturen von 80 bis 100 °C in Ausnahmefällen bis 150 °C sind zwar eigentlich unerwünscht, da sie die Zykluszeit verlängern, können aber höhere Kristallinitäten ermöglichen. Alternativ kann auch nachträglich konditioniert werden, um eine Nachkristallisation herbeizuführen. Dabei werden Dichte, Oberflächenhärte, Gleit- und Verschleißeigenschaften, Steifigkeit und Maßhaltigkeit erhöht.

Nachteilig an Erzeugnissen, die nach dem Stand der Technik auf Basis von Polyamiden nach dem Spritzgussverfahren hergestellt werden, ist oftmals deren Performance in Bezug auf die Kälteschlagzähigkeit, insbesondere in Bezug auf deren Tieftemperatur-Kälteschlagzähigkeit.

Gerade Konstruktionsteile im Bereich der Automobilindustrie müssen sehr rigide Anforderungen hinsichtlich der Kälteschlagzähigkeit erfüllen. Die Kälteschlagzähigkeit kann auf verschiedenen Wegen verbessert werden:

### 1. Verbesserung der Kälteschlagzähigkeit mittels Elastomerteilchen

Die Wirkungsweise wird beispielsweise im Kunststoffhandbuch 3/4, Carl Hanser Verlag (ISBN 3-446-16486-3), 1998, Kapitel 2.5.1.4.1, Seite 133 beschrieben: Bei Polyamiden wurde nachgewiesen, dass die Elastomerphase bei mechanischer Belastung im Innern aufreißt, was sich an einer Weissfärbung (stress-whitening) visuell bemerkbar macht. Konzentration, Verteilung und die chemische Natur der verwendeten Elastomerphase bestimmen die Eigenschaften des modifizierten Polyamids.

Je nach geplanter Anwendung wurden als geeignete Elastomerphasen verschiedene Lösungen vorgeschlagen.

So beschreibt die EP 1 170 334 B1 die Verwendung eines tieftemperaturschlagzähen Werkstoffs, der neben Polyamid (PA) als Matrixpolymer zusätzlich mindestens zwei Polymere enthält, die die Schlagzähigkeit des Werkstoffs verbessern und hierbei synergistisch zusammenwirken und auch dem tieftemperaturschlagzähigkeitsverringernden Effekt des verwendeten Weichmachers entgegenwirken. Die WO 95/22579A1 beschreibt spezielle funktionalisierte Elastomerphasen zur besseren Anbindung an die Polyamidmatrix.

Allein die Tatsache, dass bei extremer Beanspruchung aufgrund von "stress-whitening" eine Weissfärbung resultiert, deutet auf eine zunehmende und bleibende Schädigung des Bauteils. Weiterhin werden die mechanischen Festigkeiten und Steifigkeiten durch die Elastomerphase vermindert.

In WO2011/014751 werden Polyamid (PA) Composites mit Faserverstärkung beschrieben. Dazu wird ein Laminat mit innenliegender Faserverstärkung (Glasfasern, siehe Beispiele) und äußeren PA Schichten hergestellt und dann als Composite Verstärkungsmaterial in die Kavität einer Spritzgußmaschine eingebracht und mit geschmolzenem PA zu einem "overmolded composite" verspritzt. Als Verstärkungsstrukturen werden neben Glasfasern auch Aramide (aromatische Polyamide) genannt (siehe S. 8, Z. 13 - 18).

In Kunststoff Taschenbuchausgabe, Deutsche Ausgabe 1989, S. 526 - 531, findet sich eine Übersicht der Verarbeitungstemperaturen (Massetemperatur und Werkzeugtemperatur) für verschiedene PAs.

In Bauer-Brinkmann-Osswald-Schmachtenberg: Sachtling Kunststoff Taschenbuch, 2007, Hanser verlag, S. 755 findet sich eine Tabelle in der Temperaturkennwerte von verschiedenen PAs mit und ohne Glasfaseranteilen angegeben sind.

Der Artikel "Recordverdächtig dünn", Kunststoffe, Bd. 12/2004, 31.12.2004, S. 126 - 134 beschreibt eine spezielle Spritzgussmaschine, die mit hohen Drücken betrieben wird.

In Kunststoff Taschenbuchausgabe, Deutsche Ausgabe 1989, S. 702 - 704 werden unter dem Absatz "Fasern" mögliche Verstärkungsfasern genannt. Unter PA Fasern finden sich dort die aromatischen und temperaturstabilen Aramidfasern.

### 2. Verbesserung der Kälteschlagzähigkeit mittels Kurzfasern

Ab Füllgraden von etwa 30 Gew.-% führen Kurzfasern als Füllstoff, insbesondere Kurzglasfasern mit einer Länge von 1-10 mm und einem Durchmesser von 5-20 µm, zu einer Erhöhung der Schlagzähigkeit. Dies gilt sowohl für den Elastomer-modifizierten als auch für den unmodifizierten Zustand.

Aber weder durch Kurzfasern noch durch Elastomermodifizierung kann ein Totalversagen eines spritzgegossenen Bauteils bei extrem niedrigen Temperaturen, insbesondere unterhalb der Glastemperatur der Elastomerphase, sicher vermieden werden.

Unter "Totalversagen" soll erfindungsgemäß eine Zerstörung oder ein Zersplittern des Bauteils in einzelne Bruchstücke verstanden werden.

Aus diesem Grund werden nach dem Stand der Technik zur Vermeidung des Totalversagens von PA-Erzeugnissen konstruktive Maßnahmen getroffen, beispielsweise werden Metallbänder in die eigentliche Bauteilform integriert, um bei einem unvorhersehbaren Ereignis, beispielsweise einem Unfall bei Kraftfahrzeugen, eine "Nothaltefunktion" zu gewährleisten.

Die Aufgabe der vorliegenden Erfindung bestand deshalb darin, die Kälteschlagzähigkeit, insbesondere die Tieftemperaturkälteschlagzähigkeit, Polyamid-basierter Erzeugnisse zu verbessern, so dass auf zusätzliche konstruktive Maßnahmen verzichtet werden kann, um ein Totalversagen dieser Erzeugnisse zu verhindern.

Überraschenderweise wurde gefunden, dass spritzgegossene Erzeugnisse aus Polyamiden, in denen spezielle Polyamid-basierte Verstärkungsstrukturen, insbesondere Polyamidgewebe, integriert wurden, bei einer Tieftemperatur-Schlagbelastung zwar zerstört werden, aber in diesem Fall die Bruchstücke durch das Polyamidgewebe in Position gehalten werden.

Damit wird eine "Nothaltefunktion" ermöglicht und das "sich Ablösen und Umherfliegen" von Bauteilstücken, also das Totalversagen, sicher vermieden.

Überraschenderweise bewirken Polyamidgewebe in spritzgegossenen Polyamid-basierten Formmassen eine sogenannte "Selbstverstärkung"; selbstverstärkte Verbundkunststoffe haben zudem den immensen Vorteil einer einfachen Rezyklierung, da das zu rezyklierende Polyamid sortenrein anfällt.

Weiterhin für den Fachmann überraschend werden die speziellen Polyamid Verstärkungsstrukturen trotz des direkten Kontaktes mit der heißen Polymerschmelze während des Spritzgießens nicht zerstört oder signifikant geschädigt. Die Verstärkungsstruktur werden durch den hohen Schmelzedruck an die kühlere Werkzeugwand der Kavität innerhalb des Spritzgußwerkzeuges 6 (Fig. 1) gepresst und damit "gekühlt".

Gegenstand der vorliegenden Erfindung ist ein Verfahren zur Herstellung Polyamid-basierter Erzeugnisse, dadurch gekennzeichnet, dass man in einer Spritzgußmaschine
a) wenigstens eine Seitenwand der Kavität eines Spritzgußwerkzeuges mit einer Polyamid-basierten Verstärkungsstruktur auskleidet wobei als Polyamid-basierte Verstärkungsstrukturen Polyamid-basierte textile Verstärkungen aus Polyamid-Endlosfasern, Polyamid-Fäden bzw. Polyamid-Rovings, Polyamid-basierte Flechtgitter, das heißt an den Kreuzungspunkten verschweißte Gitter aus Polyamid-Monofilamenten, oder Polyamid-Rovings in Form von Geweben oder Gelegen oder Polyamid-Vliese oder Polyamid-Vliesstoffe eingesetzt werden,
b) die für den Spritzguß vorgesehene Polyamid-basierte Formmasse, die bevorzugt in Granulatform zugeführt wird, zunächst aufgeschmolzen wird, wobei sowohl für die einzusetzende Formmasse als auch für die Polyamid-basierte Verstärkungsstruktur teilkristalline oder amorphe Polyamide auf Basis aliphatischer Dicarbonsäuren, aliphatischer oder die entsprechenden Lactame eingesetzt werden, wobei auch Copolyamide aus mehreren der genannten Monomeren eingeschlossen sind,
c) diese Formmasse aus Schritt b) unter Druck in die temperierte Kavität des Spritzgußwerkzeuges einspritzt, wobei man die Werkzeugwände der Kavität des einzusetzenden Spritzgußwerkzeuges auf eine Temperatur von 80 bis 180 °C temperiert
   und
d) die in der Kavität befindliche Spritzgussmasse abkühlt und das Spritzgussteil entformt.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

In einer bevorzugten Ausführungsform sind die Werkzeugwände der Kavität eines erfindungsgemäß einzusetzenden Spritzgußwerkzeuges in Schritt c) auf eine Temperatur von 120 bis 150 °C, insbesondere auf eine Temperatur von 130 bis 140 °C temperiert.

Verfahren zur Herstellung von Erzeugnissen oder Halbzeugen auf Basis von PA durch Spritzguss arbeiten bevorzugt bei Schmelzetemperaturen im Bereich von 200 bis 330°C, besonders bevorzugt von 230 bis 300°C. In einer bevorzugten Ausführungsform weist die erfindungsgemäß einzusetzende Formmasse in Schritt b) deshalb eine Temperatur von 200 bis 300 °C, besonders bevorzugt von 260 bis 290 °C, ganz besonders bevorzugt von 270 bis 280 °C auf.

In einer Ausführung wird das erfindungsgemäße Verfahren bei einem Druck von maximal 2500 bar, bevorzugt bei einem Druck von maximal 2000 bar, besonders bevorzugt bei einem Druck von maximal 1500 bar und ganz besonders bevorzugt bei einem Druck von maximal 750 bar durchgeführt.

Das erfindungsgemäße Verfahren des Spritzgusses zeichnet sich dadurch aus, dass die Polyamid-basierte Formmasse (Fig. 1 gepunktete Darstellung), bevorzugt in Granulatform, aufgeschmolzen (plastifiziert) und als Spritzmasse unter Druck durch eine Düse (Fig. 1, Ziffer 3) in einen temperierten Hohlraum, die Kavität (Fig. 1, Ziffer 5) gespritzt wird. Nach dem Abkühlen (Erstarren) der Masse wird das Spritzgussteil/der Spritzformling (Fig. 1, Ziffer 5') entformt.

Generell unterscheidet man im Spritzgießprozess die Teilschritte:
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit bzw. dem Spritzgießwerkzeug, dem Antrieb und der Steuerung.

Erfindungsgemäß einzusetzende Spritzgussmaschinen und dazu zu verwendende Spritzgießwerkzeuge sind heute beispielsweise bei der Engel Austria GmbH und der Sumitomo (SHI) Demag Plastics Machinery GmbH, Schwaig, Deutschland erhältlich.

Für erfindungsgemäß einzusetzende Polyamid-basierte Verstärkungsstrukturen können bevorzugt die von der Firma Perlon Monofil GmbH, Dormagen, Deutschland, angebotenen verstreckten Monofilamente eingesetzt werden.

Ferner können Polyamidrovings eingesetzt werden, die aus Multifilamenten hergestellt werden, wie sie beispielsweise von der Polyamide High Performance GmbH, Wuppertal, Deutschland, unter dem Markennamen Enka®Nylon (PA6.6) Enkalon® (PA6) und Stanylenka (PA 4.6) angeboten werden.

Polyamid-basierte Verstärkungsstrukturen im Sinne der vorliegenden Erfindung sind insbesondere Polyamid-basierte textile Verstärkungen aus Polyamid-Endlosfasern, Polyamid-Fäden bzw. Polyamid-Rovings, Polyamid-basierte Flechtgitter, das heißt an den Kreuzungspunkten verschweißte Gitter aus Polyamid-Monofilamenten, oder Polyamid-Rovings in Form von Geweben oder Gelegen. Polyamid-basierte Flechtgitter sind beispielsweise in US-A 4 302 495 sowie in WO 00/40793 A1 beschrieben. Polyamid basierte Flechtgitter sind beispielsweise über Heimbach GmbH & CO KG, Düren, Deutschland zu beziehen.

Weiterhin können auch Vliese oder Vliesstoffe aus Polyamid eingesetzt werden. Unter einem Vlies oder Vliesstoff ist ein Gebilde aus Fasern begrenzter Länge zu verstehen, die auf irgendeine Weise zu einem Vlies (einer Faserschicht, einem Faserflor) zusammengefügt und auf irgendeine Weise miteinander verbunden worden sind. Siehe hierzu http://de.wikipedia.org/wiki/Vliesstoff.

Erfindungsgemäß bevorzugt werden Polyamid 6 und Polyamid 6,6 Gewebe oder Gelege eingesetzt. Die hierzu einzusetzenden Multifilamente können beispielsweise bei der Firma C. Cramer GmbH & Co. KG in 48619 Heck, Deutschland bezogen werden.

In bevorzugter Ausführungsform werden derartige PA-6 Gewebe direkt und ohne vorherige Konditionierung als Verstärkungsstruktur im erfindungsgemäßen Verfahren eingesetzt.

Die für den Einsatz als Formmasse oder als Basis für die Polyamid-basierte Verstärkungsstruktur einzusetzenden Polyamide sind teilkristalline oder amorphe Polyamide, die ausgehend von Diaminen und Dicarbonsäuren und/oder Lactamen mit wenigstens 5 Ringgliedern oder entsprechenden Aminosäuren hergestellt werden. Als Dicarbonsäuren Edukte kommen bevorzugt Adipinsäure, 2,2,4-Trimethyladipinsäure, 2,4,4-Trimethyladipinsäure, Azelainsäure, Sebazinsäure, Isophthalsäure oder Terephthalsäure, als aliphatische Diamine, besonders bevorzugt Tetramethylendiamin, Pentamethylendiamin, Hexamethylendiamin, Diaminobuten, Diaminocyclohexen, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Phenylendiamine oder Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6, Polyamid 6,6 und Caprolactam als Comonomer enthaltende Copolyamide.

Es können außerdem Anteile von rezyklierten Polyamid-Formmassen und/oder Faserrezyklaten enthalten sein.

Die für das erfindungsgemäße Verfahren in Schritt b) einzusetzenden thermoplastischen Polyamid-basierten Formmassen enthalten bevorzugt Polyamide und/oder Copolyamide mit einer relativen Viskosität ηᵣₑₗ von 2,3 bis 4,0 besonders bevorzugt von 2,7 bis 3,5, wobei die relative Viskosität an einer 1 Gew.-%igen Lösung in meta-Kresol bei 25°C gemessen wird.

Der Gehalt an Polyamid in den erfindungsgemäß einzusetzenden Polyamid-basierten Formmassen beträgt bevorzugt 99,9 bis 10 Gew.-Teile, besonders bevorzugt 99,5 bis 30 Gew.-Teile bezogen auf 100 Gew.-Teile der Polyamid-basierten Formmasse. Damit sich die Gew.-Teile zu 100 ergänzen, enthalten die erfindungsgemäß einzusetzenden Polyamid-Formmassen in bevorzugter Ausführungsform 0,1 bis 90 Gew.-Teile weitere Komponenten, besonders bevorzugt zu 0,5 bis 70 Gew.-Teilen.

Die in Schritt b) erfindungsgemäß einzusetzenden Polyamid-basierten Formmassen können in einer alternativen Ausführungsform als weitere Komponente mindestens einen Füll- oder Verstärkungsstoff enthalten.

Als Füllstoff oder Verstärkungsstoff können aber auch Mischungen aus zwei oder mehr unterschiedlichen Füllstoffen und/oder Verstärkungsstoffen, bevorzugt auf Basis von Talk, Glimmer, Silikat, Quarz, Titandioxid, Wollastonit, Kaolin, amorphen Kieselsäuren, Magnesiumcarbonat, Kreide, Feldspat, Bariumsulfat, Glaskugeln und/oder faserförmigen Füllstoffen und/oder Verstärkungsstoffen auf der Basis von Kohlenstofffasern und/oder Glasfasern, eingesetzt werden. Besonders bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist der mineralische Füllstoff ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß einzusetzenden nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS Granulometer.

Der Füllstoff und/oder Verstärkungsstoff kann in einer bevorzugten Ausführungsform oberflächenmodifiziert sein, insbesondere mit einem Haftvermittler bzw. Haftvermittlersystem auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die in den erfindungsgemäß einzusetzenden Polyamid-basierten Formmassen bevorzugt einzusetzenden Glasfasern, die im Allgemeinen einen Faserdurchmesser im Bereich von 7 bis 18 µm, bevorzugt im Bereich von 9 bis 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Bevorzugte Haftvermittler auf Silanbasis für die Vorbehandlung sind Silanverbindungen der allgemeine Formel (I)

(I) (X-(CH₂)_{q})ₖ-Si-(O-CᵣH₂ᵣ₊₁)₄₋ₖ

in der die Substituenten folgende Bedeutung haben:
- X: für NH₂-, HO- oder 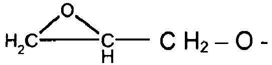 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Besonders bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X (siehe Formel (I)) eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer alternativen bevorzugten Ausführungsform enthalten die erfindungsgemäß in Schritt b) einzusetzenden Polyamid-basierten Formmassen 0,001 bis 65 Gew.-Teile mindestens eines Flammschutzadditivs, wobei sich die Gew.-Teile der oben beschriebenen Komponenten entsprechend reduzieren, dass sie in Summe stets 100 ergeben.

Als Flammschutzmittel werden bevorzugt handelsübliche organische Halogenverbindungen mit Synergisten oder handelsübliche organische Stickstoffverbindungen oder organisch/anorganische Phosphorverbindungen einzeln oder im Gemisch eingesetzt. Auch mineralische Flammschutzadditive wie Magnesiumhydroxid oder Ca-Mg-Carbonat-Hydrate (z.B. DE-A 4 236 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien bevorzugt genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol und Decabrom-diphenylether. Als organische Phosphorverbindungen sind bevorzugt die Phosphorverbindungen gemäß WO-A 98/17720 (= US 6 538 024) geeignet, insbesondere Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, organische und anorganische Phosphinsäurederivate und deren Salze, insbesondere Metalldialkylphosphinate, insbesondere Aluminium-tris[dialkylphosphinate] oder Zink-bis[dialkylphosphinate], außerdem roter Phosphor, Phosphite, Hypophosphite, Phospinoxide, Phosphazene, Melaminpyrophosphat und deren Mischungen. Als Stickstoffverbindungen kommen bevorzugt solche aus der Gruppe der Allantoin-, Cyanursäure-, Dicyandiamid, Glycouril-, Guanidin- Ammonium- und Melaminderivate, bevorzugt Allantoin, Benzoguanamin, Glykouril, Melamin, Kondensationsprodukte des Melamins, insbesondere Melem, Melam oder Melom, bzw. höher kondensierte Verbindungen dieses Typs und Addukte des Melamins mit Säuren, insbesondere mit Cyanursäure (Melamincyanurat), Phosphorsäure (Melaminphosphat) oder kondensierten Phosphorsäuren (z.B. Melaminpolyphosphat) in Frage. Als Synergisten sind bevorzugt Antimonverbindungen, insbesondere Antimontrioxid, Natriumantimonat und Antimonpentoxid, Zinkverbindungen, insbesondere Zinkborat, Zinkoxid, Zinkphosphat und Zinksulfid, Zinnverbindungen, insbesondere Zinnstannat und Zinnborat, sowie Magnesiumverbindungen, insbesondere Magnesiumoxid, Magnesiumcarbonat und Magensiumborat, geeignet. Auch können dem Flammschutzmittel sogenannte Kohlenstoffbildner, insbesondere Phenol-Formaldehydharze, Polycarbonate, Polyphenylether, Polyimide, Polysulfone, Polyethersulfone, Polyphenylosulfide und Polyetherketone sowie Antitropfmittel wie Tetrafluorethylenpolymerisate, zugesetzt werden.

In einer weiteren alternativen bevorzugten Ausführungsform enthalten die erfindungsgemäß einzusetzenden Polyamid-Formmassen zusätzlich zu den oben genannten Komponenten oder anstelle der Füllstoffe 0,01 bis 80 Gew.-Teile, besonders bevorzugt 2 bis 25 Gew.-Teile mindestens eines Elastomermodifikators, wobei sich die Gew.-Teile der oben beschriebenen Komponenten entsprechend reduzieren, dass sie in Summe stets 100 ergeben.

Die in einer bevorzugten Ausführung einzusetzenden Elastomermodifikatoren umfassen ein oder mehrere Pfropfpolymerisate von
- E.1: 5 bis 95 Gew.-%, vorzugsweise 30 bis 90 Gew.-%, wenigstens eines Vinylmonomeren auf
- E.2: 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere E.1 sind vorzugsweise Gemische aus
- E.1.1: 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- E.1.2: 1 bis 50 Gew.-% Vinylcyanide, bevorzugt ungesättigte Nitrile wie Acrylnitril und Methacrylnitril, und/oder (Meth)Acrylsäure-(C₁-C₈)-Alkylester, insbesondere Methylmethacrylat, n-Butylacrylat, t-Butylacrylat, und/oder Derivate, insbesondere Anhydride und Imide, ungesättigter Carbonsäuren, insbesondere Maleinsäureanhydrid und N-Phenyl-Maleinimid.

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind bevorzugt Dienkautschuke, EP(D)M-Kautschuke, also solche auf Basis Ethylen/Propylen sowie Dien, Acrylat-, Polyurethan-, Silikon-, Chloropren und Ethylen/Vinylacetat-Kautschuke.

Bevorzugte Pfropfgrundlagen E.2 sind Dienkautschuke, insbesondere auf Basis Butadien, Isopren etc., oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die Elastomermodifikatoren bzw. Pfropfpolymerisate E) werden durch radikalische Polymerisation, bevorzugt durch Emulsions-, Suspensions-, Lösungs- oder Massepolymerisation, besonders bevorzugt durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E) auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen E2, vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, bevorzugt Methyl-, Ethyl-, Butyl-, n-Octyl- und 2-Ethylhexylester; Halogenalkylester, besonders bevorzugt Halogen-C₁-C₈-alkyl-ester, insbesondere Chlorethylacrylat sowie Mischungen dieser Monomeren.

In einer weiteren alternativen bevorzugten Ausführungsform enthalten die erfindungsgemäß in Schritt b) einzusetzenden Polyamid-basierten Formmassen zusätzlich zu den oben genannten Komponenten oder anstelle wenigstens einer der oben genannten Komponenten 0,001 bis 10 Gew.-Teile, bevorzugt 0,05 bis 3 Gew.-Teile weitere übliche Additive, wobei sich die Gew.-Teile der oben beschriebenen Komponenten entsprechend reduzieren, dass sie in Summe stets 100 ergeben.

Übliche Additive im Sinne der vorliegenden Erfindung sind bevorzugt Stabilisatoren, insbesondere UV-Stabilisatoren, Thermostabilisatoren, Gammastrahlenstabilisatoren, Antistatika, Fließhilfsmittel, Entformungsmittel, weitere von den oben genannten Flammschutzmittel verschiedene Brandschutzadditive, Emulgatoren, Nukleierungsmittel, Weichmacher, Gleitmittel, Farbstoffe, Pigmente oder Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole, Hydrochinone, aromatische sekundäre Amine, insbesondere Diphenylamine, substituierte Resorcine, Salicylate, Benzotriazole und Benzophenone, sowie verschiedene substituierte Vertreter dieser Gruppen und deren Mischungen eingesetzt.

Als Pigmente bzw. Farbstoffe werden bevorzugt Titandioxid, Zinksulfid, Ultramarinblau, Eisenoxid, Ruß, Phthalocyanine, Chinacridone, Perylene, Nigrosin und Anthrachinone eingesetzt, insbesondere Russ der Nigrosin.

Als Nukleierungsmittel werden bevorzugt Natrium- oder Calciumphenylphosphinat, Aluminiumoxid, Siliziumdioxid sowie Talkum eingesetzt, insbesondere Talkum.

Als Gleit- und Entformungsmittel werden bevorzugt Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bisstearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt.

Als Weichmacher werden bevorzugt Phthalsäuredioctylester, Phthalsäuredibenzylester, Phthalsäurebutylbenzylester, Kohlenwasserstofföle, N-(n-Butyl)benzolsulfonamid eingesetzt.

Als Additive zur Erhöhung der elektrischen Leitfähigkeit werden bevorzugt Ruße, Leitfähigkeitsruße, Carbonfibrillen, nanoskalige Graphit- und Kohlenstofffasern, Graphit, leitfähige Polymere, Metallfasern sowie andere übliche Additive zur Erhöhung der elektrischen Leitfähigkeit zugesetzt. Als nanoskalige Fasern werden bevorzugt sogenannte "single wall Kohlenstoff-Nanotubes" oder "multi wall Kohlenstoff-Nanotubes" (z.B. der Firma Hyperion Catalysis) eingesetzt.

In einer weiteren bevorzugten Ausführungsform werden der erfindungsgemäß einzusetzenden Polyamid-basierten Formmasse Fließverbesserer als Addtiv zugegeben, bevorzugt wenn es sich um hochgefüllte Polyamid-basierte Formmassen handelt, wobei hochgefüllt für einen Füllstoffanteil im Bereich von 40-75 Gew.-% der Gesamtformmasse, bevorzugt 50 bis 65 Gew.% Füllstoff steht.

Teilkristalline Polyamide mit Fließverbesserer werden u.a. angeboten als Technyl Star®, Durethan® Flow oder Ultramid® B, Ultramid® A oder Ultramid® T. Diese teilkristallinen Polyamide enthalten zusätzliche Fließverbesserer. Siehe Ultramid® (PA) Product Broschüre (Europe) der BASF SE, October 2010, Resin Express, Durchblick, Ausgabe 30.03.2008 oder Durethan® BKV 35XF/ BKV 30 XF Produktbroschüre der Lanxess Deutschland GmbH.

Erfindungsgemäß bevorzugt werden der erfindungsgemäß einzusetzenden Polyamid-basierten Formmasse Fließverbesserer als Additiv eingesetzt, die statische Copolymerisate aus mindestens einem Olefin, bevorzugt α-Olefin und mindestens einem Methacrylsäureester oder Acrylsäureester eines aliphatischen Alkohols, wobei der MFI des Copolymerisats 100 g / 10 min, vorzugsweise 150 g / 10 min, besonders bevorzugt 300 g / 10 min nicht unterschreitet, enthalten. In einer bevorzugten Ausführungsform besteht das Copolymerisat zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen, ausgewählt aus der Gruppe umfassend Epoxide, Oxetane, Anhydride, Imide, Aziridine, Furane, Säuren, Amine, Oxazoline, enthalten.

Die vorliegende Erfindung betrifft aber auch die Verwendung Polyamid-basierter Verstärkungsstrukturen und Polyamid-basierter Formmassen in Spritzgiessprozessen zur Herstellung tieftemperatur-kälteschlagzäher, sortenreiner Erzeugnisse.

Kälteschlagzähigkeit wird üblicherweise für Thermoplasten durch Stoßversuch / Fallbolzenversuch nach DIN 53443 Teil 1 bis Temperaturen bis - 25 °C ermittelt. Auf noch tiefere Temperaturen ist diese Norm jedoch nicht mehr anwendbar. TieftemperaturKälteschlagzähigkeit im Rahmen der vorliegenden Erfindung erfasst deshalb Temperaturen von -196 °C (Siedepunkt des Stickstoffs) bis - 30 °C, bevorzugt Temperaturen von -100 °C bis -30 °C, besonders bevorzugt Temperaturen von -70 °C bis -30 °C. Sortenrein im Sinne der vorliegenden Erfindung bedeutet, dass sowohl das Polymer der Verstärkungsstruktur als auch das Matrix-Polymer aus den gleichen Polymerbausteinen aufgebaut sind und in später gegebenenfalls vorzunehmenden Recyclingprozessen nicht voneinander getrennt werden müssen, damit sie einer erneuten Wiederverwendung zugeführt werden können.

Abkühlen in Schritt d) des erfindungsgemäßen Verfahrens bedeutet ein Erniedrigen der Temperatur des Spritzgussteils/des Spritzformlings, bevorzugt auf Temperaturen 80 bis 180 °C, besonders bevorzugt auf 100 bis 140 °C umfasst.

### Beispiele

Versuchsdurchführung:
Die im Rahmen der vorliegenden Erfindung verwendeten Polyamid-basierten Verstärkungsstrukturen waren PA 6 Gewebe der Firma Polyamide High Performance GmbH Wuppertal / Deutschland, die ihrerseits aus PA 6 Multifilamenten (Typ 540T, ID 1180f280) und PA 6,6 (140 HRT, ID 1880f280) hergestellt wurden.

Die Multifilamente wurden bei der Firma C. Cramer GmbH & Ko. KG in Heek, Deutschland, mit 15,5 x 15,5 Fäden pro Zentimeter zu einem 2-2 Köpergewebe verarbeitet, Flächengewicht etwa 600g/m².

Diese PA-basierten 2-2 Köpergewebe (PA 6 Multifilamentgewebe) wurden im Rahmen der vorliegenden Erfindung ohne vorherige Konditionierung als Verstärkungsstruktur eingesetzt.

Für die Versuche im Rahmen der vorliegenden Erfindung wurde als Spritzgussmaschine eine Demag Ergotech 100/420-310system der Firma Demag Ergotech GmbH (heute Sumitomo (SHI) Demag Plastics Machinery GmbH, Schwaig, Deutschland) und ein Plattwerkzeug mit den Maßen 150 mm x 90 mm (in stufenlos einstellbaren Dicken) eingesetzt. Bei den Versuchen wurde eine konstante Plattendicke von 4.25 mm eingestellt.

Zur Herstellung der spritzgegossenen Platten wurde in Schritt b) des erfindungsgemäßen Verfahrens als Polyamid-basierte Formmasse unverstärktes Polyamid (Durethan^{®} B30S der Lanxess Deutschland GmbH) eingesetzt, wobei bei einigen Platten zusätzlich das o.a. PA 6 Multifilamentgewebe als Verstärkungsstruktur gemäß den oben genannten Ausführungen an der Außenwand der Kavität des Spritzgusswerkzeuges befestigt wurde. Zur besseren Fixierung wurde handelsübliches Klebeband auf Basis einer Aluminiumfolie verwendet.

Das PA 6 Multifilamentgewebe hatte die Abmessungen 85 x 145 mm.

Um eine gute Anbindung der textilen Verstärkung an den Spritzformling zu erzielen waren hohe Schmelzetemperaturen und hohe Werkzeugtemperaturen erforderlich.

Konkret wurde mit 280°C Schmelzetemperatur und 130°C Werkzeugtemperatur gearbeitet.

### Durchgeführte Prüfungen:

### 1. Vermeidung des Totalversagens:

Nach Beendigung des Spritzgusses wurden die Spritzformlinge in Plattenform (spritzgegossene Platten) in flüssigem Stickstoff auf nahezu -200° C abgekühlt, dann rasch aus dem flüssigen Stickstoff entnommen, zum Schutz von umherfliegenden Splittern in eine PE-Kunststoffbeutel (PE = Polyethylen) gegeben, auf einen Betonboden gelegt, wobei eine Kante des Bauteils auf einer Holzleiste mit 4 cm Kantenlänge zu liegen kam. Eine 1 kg schwere Eisenkugel wurde aus einer Fallhöhe von 2 m mittig auf den Spritzformling in Plattenform fallen gelassen; das entspricht etwa einer Schlagenergie von 20 Joule.

In allen Fällen, d.h. bei allen Spritzformlingen in Plattenform mit und ohne Verstärkungsstruktur, wurde das Bauteil zerstört.

Überraschenderweise jedoch zeigte kein einziger erfindungsgemäß hergestellter Spritzformling in Plattenform mit integrierter Verstärkungsstruktur aus PA 6 Multifilamentgewebe ein Totalversagen; die Polyamid-basierte Verstärkungsstruktur hielt die einzelnen Bruchstücke sicher zusammen, verhinderte ein Umherfliegen von scharfkantigen Bruchstücken und war nach wie vor in der Lage, Belastungen über die weiterhin intakte Gewebestruktur aufzunehmen.

Sämtliche Spritzformlinge in Plattenform aus reinem Polyamid 6 und ohne erfindungsgemäß einzusetzende Polyamid-basierte Verstärkungsstruktur hingegen zerplatzten in mehrere Bruchstücke.

### 2. Biegefestigkeiten

Aus den spritzgegossenen Platten wurden in der Quer- und Längsrichtung (Bezug: Fließrichtung der Polymerschmelze) Probenkörper in den Massen 80 x10 x 4 mm ausgesägt und an diesen Probenkörpern die Schlagzähigkeit entsprechend Izod 180-1 U gemessen:
Für die unverstärkten PA 6- Referenzpobenkörper (ohne textile PA 6 Multifilamentgewebeverstärkung) ergab sich für die Schlagzähigkeit ein aus sieben Einzelmessungen resultierender Mittelwert von 70.98 kJ/m². Für die mit einer Lage des oben näher beschriebenen PA 6 Multifilamentgewebe Verstärkungsmaterials bzw. mit einer Lage von PA 6,6 Multifilament Verstärkungsmaterial ausgestatteten Probenkörper resultierte für die Schlagzähigkeit ein Mittelwert von:
81.4 kJ/m² bei dem PA 6 basierten Verstärkungsgewebe
85.3 kJ/m² bei dem PA 6,6 basierten Verstärkungsgewebe.

## Patentansprüche

1. Verfahren zur Herstellung Polyamid-basierter Erzeugnisse, **dadurch gekennzeichnet, dass** man in einer Spritzgußmaschine
a) wenigstens eine Seitenwand der Kavität eines Spritzgußwerkzeuges mit einer Polyamid-basierten Verstärkungsstruktur auskleidet, wobei als Polyamid-basierte Verstärkungsstruktur Polyamid-basierte textile Verstärkungen aus Polyamid-Endlosfasern, Polyamid-Fäden, Polyamid-Rovings, Polyamid-basierte Flechtgitter, die vorzugsweise an den Kreuzungspunkten verschweißt sind, Polyamid-Vliese oder Polyamid-Vliesstoffe eingesetzt werden,
b) die für den Spritzguß vorgesehene Polyamid-basierte Formmasse, die bevorzugt in Granulatform zugeführt wird, zunächst aufgeschmolzen wird, wobei sowohl für die einzusetzende Formmasse als auch für die Polyamid-basierte Verstärkungsstruktur teilkristalline oder amorphe Polyamide auf Basis aliphatischer Dicarbonsäuren, aliphatischer oder die entsprechenden Lactame eingesetzt werden, wobei auch Copolyamide aus mehreren der genannten Monomeren eingeschlossen sind,
c) diese Formmasse aus Schritt b) unter Druck in die temperierte Kavität des Spritzgußwerkzeuges einspritzt, wobei man die Werkzeugwände der Kavität des einzusetzenden Spritzgußwerkzeuges auf eine Temperatur von 80 bis 180 °C temperiert
und
d) die in der Kavität befindliche Spritzgussmasse abkühlt und das Spritzgussteil entformt.

2. Verfahren gemäß der Anspruch 1, **dadurch gekennzeichnet, dass** die einzusetzende Formmasse in Schritt b) eine Temperatur von 200 bis 300 °C, aufweist.

3. Verfahren gemäß einem der Ansprüche 1 bis 2, **dadurch gekennzeichnet, dass** dieses bei Drücken von maximal 2500 bar durchgeführt wird.

4. Verfahren gemäß Anspruch 1, **dadurch gekennzeichnet, dass** Polyamid 6 und Polyamid 6,6 Gewebe oder Gelege eingesetzt werden.

5. Verfahren gemäß einem der Ansprüche 1 oder 4, **dadurch gekennzeichnet, dass** für die Polyamid-basierte Verstärkungsstruktur teilkristalline oder amorphe Polyamide eingesetzt werden, die ausgehend von Diaminen und Dicarbonsäuren und/oder Lactamen mit wenigstens 5 Ringgliedern oder entsprechenden Aminosäuren hergestellt werden.

6. Verfahren gemäß einem der Ansprüche 1 bis 5, **dadurch gekennzeichnet, dass** die in Schritt b) einzusetzenden thermoplastischen Polyamid-basierten Formmassen Polyamide und/oder Copolyamide mit einer relativen Viskosität nᵣₑₗ von 2,3 bis 4,0 bevorzugt von 2,7 bis 3,5 enthalten, wobei die relative Viskosität an einer 1 Gew.-%igen Lösung in meta-Kresol bei 25°C gemessen wird.

7. Verfahren gemäß einem der Ansprüche 1 bis 6, **dadurch gekennzeichnet, dass** der Gehalt an Polyamid in den Polyamid-basierten Formmassen 99,9 bis 10 Gew.-Teile beträgt und diese noch 0,1 bis 90 Gew.-Teile weitere Komponenten enthalten, wobei sich die Gew.-Teile zu 100 ergänzen.

8. Verfahren gemäß Anspruch 7, **dadurch gekennzeichnet, dass** die Polyamid-basierten Formmassen als weitere Komponente mindestens einen Füll- oder Verstärkungsstoff enthalten.

9. Verfahren gemäß Anspruch 8, **dadurch gekennzeichnet, dass** Füll- oder Verstärkungsstoffe auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern eingesetzt werden.

10. Verfahren gemäß Anspruch 7, **dadurch gekennzeichnet, dass** Glasfasern mit einem Faserdurchmesser zwischen 7 und 18 µm eingesetzt werden.

11. Verfahren gemäß einem der Ansprüche 1 bis 10, **dadurch gekennzeichnet, dass** das Abkühlen in Schritt d) ein Erniedrigen der Temperatur des Spritzgiessteils / des Spritzformlings auf Temperaturen von 80 bis 180 °C, bevorzugt auf 100 bis 140 °C umfasst.

12. Verwendung Polyamid-basierter Verstärkungsstrukturen und Polyamid-basierter Formmassen in Spritzgiessprozessen zur Herstellung tieftemperatur-kälteschlagzäher, sortenreiner Erzeugnisse, wobei sowohl für die einzusetzende Formmasse als auch für die Polyamid-basierte Verstärkungsstruktur teilkristalline oder amorphe Polyamide auf Basis aliphatischer Dicarbonsäuren, aliphatischer oder die entsprechenden Lactame eingesetzt werden, wobei auch Copolyamide aus mehreren der genannten Monomeren eingeschlossen sind und wobei als Polyamid-basierte Verstärkungsstruktur Polyamid-basierte textile Verstärkungen aus Polyamid-Endlosfasern, Polyamid-Fäden, Polyamid-Rovings, Polyamid-basierte Flechtgitter, die vorzugsweise an den Kreuzungspunkten verschweißt sind, Polyamid-Vliese oder Polyamid-Vliesstoffe eingesetzt werden.

## Claims

1. Process for the production of polyamide-based products, **characterized in that** in an injection-moulding machine
a) at least one side wall of the cavity of an injection mould is lined with a polyamide-based reinforcement structure, where polyamide-based braided meshes preferably welded at the intersection points, polyamide non-wovens or non-woven polyamide fabrics, polyamide-based textile reinforcement systems made of continuous-filament polyamide fibres, polyamide threads or polyamide rovings are used as polyamide-based reinforcement structure,
b) the polyamide-based moulding composition intended for injection moulding, preferably introduced in pellet form, is first melted, where not only the moulding composition to be used but also the polyamide-based reinforcement structure uses semicrystalline or amorphous polyamides based on aliphatic dicarboxylic acids, on aliphatic or uses the corresponding lactams, where copolyamides made of a plurality of the monomers mentioned are also included,
c) this moulding composition from step b) is injected under pressure into the temperature-controlled cavity of the injection mould, where the temperature of the mould walls of the cavity of the injection mould to be used are controlled to a temperature of from 80 to 180°C
and
d) the injection-moulding composition located in the cavity is cooled and the injection moulding is demoulded.

2. Process according to Claim 1, **characterized in that** the temperature of the moulding composition to be used in step b) is from 200 to 300°C.

3. Process according to either of Claims 1 and 2, **characterized in that** this is carried out at pressures of at most 2500 bar.

4. Process according to Claim 1, **characterized in that** laid scrims or woven fabrics made of polyamide 6 and of polyamide 6,6 are used.

5. Process according to either of Claims 1 and 4, **characterized in that** the polyamide-based reinforcement structure uses semicrystalline or amorphous polyamides which are produced from diamines and dicarboxylic acids and/or lactams having at least 5 ring members or corresponding amino acids.

6. Process according to any of Claims 1 to 5, **characterized in that** the thermoplastic polyamide-based moulding compositions to be used in step b) comprise polyamides and/or copolyamides with a relative viscosity πᵣₑₗ of from 2.3 to 4.0, preferably from 2.7 to 3.5, where the relative viscosity is measured on a 1% by weight solution in meta-cresol at 25°C.

7. Process according to any of Claims 1 to 6, **characterized in that** the content of polyamide in the polyamide-based moulding compositions is from 99.9 to 10 parts by weight and these also comprise from 0.1 to 90 parts by weight of other components, where the parts by weight give a total of 100.

8. Process according to Claim 7,**characterized in that** the polyamide-based moulding compositions comprise, as further component, at least one filler or reinforcing material.

9. Process according to Claim 8,**characterized in that** fillers or reinforcing materials based on talc, mica, silicate, quartz, titanium dioxide, wollastonite, kaolin, amorphous silicas, magnesium carbonate, chalk, feldspar, barium sulphate, or glass beads are used, and/or fibrous fillers and/or reinforcing materials based on carbon fibres and/or glass fibres are used.

10. Process according to Claim 7, **characterized in that** glass fibres with fibre diameter from 7 to 18 µm are used.

11. Process according to any of Claims 1 to 10, **characterized in that** the cooling in step d) comprises lowering of the temperature of the injection moulding to temperatures from 80 to 180°C, preferably from 100 to 140°C.

12. Use of polyamide-based reinforcement structures and polyamide-based moulding compositions in injection-moulding processes for the production of products which are composed of a single type of material and which have low-temperature impact resistance, where not only the moulding composition to be used but also the polyamide-based reinforcement structure uses semicrystalline or amorphous polyamides based on aliphatic dicarboxylic acids, on aliphatic or uses the corresponding lactams, where copolyamides made of a plurality of the monomers mentioned are also included, and where polyamide-based braided meshes preferably welded at the intersection points, polyamide non-wovens or non-woven polyamide fabrics, polyamide-based textile reinforcement systems made of continuous-filament polyamide fibres, polyamide threads or polyamide rovings are used as polyamide-based reinforcement structure.

## Revendications

1. Procédé de fabrication d'articles à base de polyamide, **caractérisé en ce que**, dans une machine de moulage par injection,
a) au moins une paroi latérale de la cavité d'un outil de moulage par injection est revêtue avec une structure de renforcement à base de polyamide, des renforcements textiles à base de polyamide constitués par des filaments en polyamide, des fils en polyamide, des mèches en polyamide, des grilles tressées à base de polyamide, qui sont de préférence soudées aux croisements, des non-tissés en polyamide ou des toiles non tissées en polyamide, étant utilisés en tant que structure de renforcement à base de polyamide,
b) le matériau de moulage à base de polyamide prévu pour le moulage par injection, qui est de préférence introduit sous forme granulaire, est tout d'abord fondu, des polyamides partiellement cristallins ou amorphes à base d'acides dicarboxyliques aliphatiques, d'aliphatiques ou de lactames correspondants, étant utilisés aussi bien pour le matériau de moulage à utiliser que pour la structure de renforcement à base de polyamide, les copolyamides de plusieurs des monomères cités étant également inclus,
c) ce matériau de moulage de l'étape b) est injecté sous pression dans la cavité tempérée de l'outil de moulage par injection, les parois de la cavité de l'outil de moulage par injection utilisé étant tempérées à une température de 80 à 180 °C,
et
d) le matériau de moulage par injection se trouvant dans la cavité est refroidi et la pièce moulée par injection est démoulée.

2. Procédé selon la revendication 1, **caractérisé en ce que** le matériau de moulage utilisé à l'étape b) présente une température de 200 à 300 °C.

3. Procédé selon l'une quelconque des revendications 1 à 2, **caractérisé en ce que** celui-ci est réalisé à des pressions d'au plus 2 500 bar.

4. Procédé selon la revendication 1, **caractérisé en ce qu'**un tissu ou une nappe en polyamide 6 et polyamide 6,6 est utilisé.

5. Procédé selon l'une quelconque des revendications 1 ou 4, **caractérisé en ce que** des polyamides partiellement cristallins ou amorphes qui sont fabriqués à partir de diamines et d'acides dicarboxyliques et/ou de lactames contenant au moins 5 éléments de cycle ou d'acides aminés correspondants sont utilisés pour la structure de renforcement à base de polyamide.

6. Procédé selon l'une quelconque des revendications 1 à 5, **caractérisé en ce que** les matériaux de moulage à base de polyamide thermoplastiques utilisés à l'étape b) contiennent des polyamides et/ou des copolyamides ayant une viscosité relative ηᵣₑₗ de 2,3 à 4,0, de préférence de 2,7 à 3,5, la viscosité relative étant mesurée sur une solution à 1 % en poids dans du méta-crésol à 25 °C.

7. Procédé selon l'une quelconque des revendications 1 à 6, **caractérisé en ce que** la teneur en polyamide des matériaux de moulage à base de polyamide est de 99,9 à 10 parties en poids, et ceux-ci contiennent également 0,1 à 90 parties en poids d'autres composants, la somme des parties en poids étant de 100.

8. Procédé selon la revendication 7, **caractérisé en ce que** les matériaux de moulage à base de polyamide contiennent en tant que composant supplémentaire au moins une charge ou une matière de renforcement.

9. Procédé selon la revendication 8, **caractérisé en ce que** des charges ou des matières de renforcement à base de talc, de mica, de silicate, de quartz, de dioxyde de titane, de wollastonite, de kaolin, de silices amorphes, de carbonate de calcium, de craie, de feldspath, de sulfate de baryum, de billes de verre et/ou de charges fibreuses et/ou des matières de renforcement à base de fibres de carbone et/ou de fibres de verre sont utilisées.

10. Procédé selon la revendication 7, **caractérisé en ce que** des fibres de verre d'un diamètre de fibre compris entre 7 et 18 µm sont utilisées.

11. Procédé selon l'une quelconque des revendications 1 à 10, **caractérisé en ce que** le refroidissement à l'étape d) comprend un abaissement de la température de la pièce moulée par injection/du corps moulé par injection à des températures de 80 à 180 °C, de préférence de 100 à 140 °C.

12. Utilisation de structures de renforcement à base de polyamide et de matériaux de moulage à base de polyamide dans des procédés de moulage par injection pour la fabrication d'articles homogènes résistants aux impacts à basse température, des polyamides partiellement cristallins ou amorphes à base d'acides dicarboxyliques aliphatiques, d'aliphatiques ou de lactames correspondants étant utilisés aussi bien pour le matériau de moulage à utiliser que pour la structure de renforcement à base de polyamide, les copolyamides de plusieurs des monomères cités étant également inclus, et des renforcements textiles à base de polyamide constitués par des filaments en polyamide, des fils en polyamide, des mèches en polyamide, des grilles tressées à base de polyamide, qui sont de préférence soudées aux croisements, des non-tissés en polyamide ou des toiles non tissées en polyamide, étant utilisés en tant que structure de renforcement à base de polyamide.
